# EUROPEAN PATENT APPLICATION

(11) **EP 4 806 259 A1**
(43) Date of publication of application: **16.09.2026**
(21) Application number: 24828841.7
(22) Date of filing: 31.10.2024
(51) Int. Cl.: A01G 13/31, A01G 13/32, A01G 13/33, D04H 1/04, D04H 1/4266, D04H 1/46, D04H 1/498, D04H 1/74, A43B 23/02, A41D 31/06, A47C 31/11, B32B 5/02, B32B 5/06, B32B 5/26, B60N 2/60, E02B 15/10, H04R 9/06

(54) **MULCHING SUITABLE FOR AGROTEXTILE USE AND APPLICATIONS OF SAME**

(30) Priority: 31.10.2023 ES 202331934 U
(71) Applicant: Clic Recycle SL, 08003 Barcelona (ES)
(72) Inventor: ITEY, Valérie Isabelle, 08003 Barcelona (ES)
(74) Representative: Curell Suñol S.L.P.
(86) International application number: PCT/ES2024/070677
(87) International publication number: WO 2025/093799

(57) **Abstract**

Padding suitable for agrotextile use and applications thereof. Wherein said padding has a non-woven sheet structure, and said non-woven sheet is composed of human hair and plant fibres and is free of non-human animal fibres; wherein said plant fibres comprise at least hemp fibres in a proportion ranging between 30% and 70% with respect to the total weight, and wherein said human hair is in a proportion ranging between 30% and 70% with respect to the total weight.

## Description

### Field of Invention

The invention is firstly related to the field of plant products, in particular for agricultural, horticulture or gardening applications, among others.

In particular, the invention relates to a padding suitable for use as agrotextile mulch, for example, for the protection of plants and/or soil in agriculture, horticulture or gardening, and having a non-woven sheet structure, for example, a web made of different types of fibres.

The invention also relates to its manufacturing process, as well as corresponding device and system comprising said padding.

The invention also relates to a floating barrier for water decontamination containing said padding. The invention also relates to the use of said padding as an insulating component for different applications.

### State of the art

Paddings or mulches are used in agriculture, horticulture, viticulture, and gardening to cover the soil with a product, which main goal is to defend plants and soil from atmospheric agents, such as, desiccation, substrate drag, and/or nutrients due to rain, changes in the soil temperature, etc. Likewise, mulch makes it difficult the growth of weeds. In this way, the mulch promotes the cultivation processes, improving the health of the plants and increasing their yield. Some mulches are also used to protect slopes and/or to prevent soil erosion.

Traditionally, materials, such as, straw, ferns, pruning debris, or cut grass have been used, which are spread over the field to be protected. Generally, these mulches have a short durability because the material degrades quickly. In contrast, some of the mulches when decomposed serve as an additional nutrient supply to the soil. Other common products include tree bark, sawdust, dried leaves, or even sand or gravel. The mulch must be replaced often and extends in a relatively thin layer to prevent compaction of the soil due to its weight and to promote aeration.

With the aim of improving durability, plastic mulches have appeared in the market, said plastic mulches can retain moisture for a long time, are easily placed, have a low weight and do not degrade as quickly as traditional ones, although they must be removed at the end of the growing season. Biodegradable plastic mulches are also known, which avoid the need to remove them at the end of the season, although they generally do not completely degrade, leaving many fine plastic residues left when trying to remove the remains at the end of the season. However, all these types of plastic mulches have significant drawbacks. The main one is the use of plastic, which has a very negative impact on the environment. Furthermore, if it is waterproof, it prevents rainwater from reaching the ground and also hinders the exchange of oxygen. Likewise, they can stress plants, because they do not regulate temperature, but rather tend to increase it, which is an advantage in cold climates, but can be a problem in warm climates or seasons. Thus, clearances should be allowed for the plants, and typically localised irrigation should be used, for example, drip irrigation.

Subsequently, in order to avoid the use of plastics, other types of mulches have appeared as products with a non-woven sheet structure, composed of intertwined natural fibres. For example, there are commercial products consisting of mulches made of coconut fibres, in particular, discs of sheet material that are placed on top of a pot substrate, with a cut for the passage of the plant stem.

More recently, other types of mulches aimed at recycling waste materials, particularly human hair, have also appeared. After a haircut, for example in a hairdressing saloon, combustion is the usual treatment for that discarded hair, which has negative effects on the environment. For this reason, some solutions propose recycling said hair to create mulches that can be used in agriculture, horticulture, or gardening, for example. However, hair alone has a very slow biodegradability time of up to seven years, and thus, the remains would have to be removed quite frequently. In addition, hair is stiff and straight, making it difficult to create mulches with some structure. For all the above, the proposed solutions require other fibres that provide structure, in which the hair can be embedded without falling out. Thus, solutions that combine human hair with wool, or with similar fibres, such as, cotton, are known. Unfortunately, both wool and cotton have significant environmental issues that are widely known. Wool requires animal breeding and care, with the associated costs, carbon footprint and water consumption. Cotton farming, meanwhile, requires a large amount of water and has a significant impact both ecologically and socially. Consequently, the corresponding mulches, despite recycling human hair, are generally unsustainable.

Therefore, a type of mulch, which is an alternative to those known and that solves the problems described above is necessary.

### Summary of Invention

The invention is intended to provide a padding of the type indicated at the beginning, which allows solving the problems described above.

This purpose is achieved through a padding of the type indicated at the beginning, characterised in that said non-woven sheet is composed of human hair and plant fibres, and is free of nonhuman animal fibres; wherein said plant fibres comprise at least hemp fibres in a proportion of between 30% and 70% with respect to the total weight, and wherein said human hair is in a proportion of between 30% and 70% with respect to the total weight.

The padding of the invention facilitates the recycling of human hair that would normally be discarded in hairdressers or barbershops, and it also has several advantages over paddings known in the art.

First, by being free of animal-derived fibres, e.g., wool, animals, such as, boars and rabbits are not attracted to the padding and, consequently, to the plants or crops being protected. It has also been proven that not only are animals not attracted, but that the presence of human hair, which is free of fibres of animal origin scares those animals away. On the other hand, although both wool and hemp retain temperature, said retention is notably greater in the case of wool, even when wet, which can be harmful in warm weather or seasons, making it difficult to exchange heat from the soil. Additionally, the padding of the present invention is suitable for vegan biocyclic growing processes, which characteristics require that growing methods follow the principles of veganism.

Second, hemp fibres advantageously complement those of human hair. Hemp fibres are obtained from industrial hemp, and its growing is very low in nutrients and especially in water demand, with a consumption estimated to be up to 90% lower than that of cotton. Hemp growing generally does not require fumigation or chemical fertilizers. It is a versatile and resistant type of culture that has a remarkably high yield. All of this makes it highly sustainable. In this way, the padding of the invention, which has a high proportion of human hair and hemp fibres, results in an efficient and highly sustainable product, apart from allowing recycling of human hair, it also allows protecting soil and plants, retain water, avoid weeds, and regulate temperature, among other characteristics. It also prevents soil compaction and allows oxygen exchange without preventing rainwater from reaching the ground and helps to drive away potentially plant-damaging animals, such as rabbits or boars. Preliminary tests have shown that irrigation water consumption is reduced by at least the same rate as with plastic mulches. Likewise, the need to use herbicides, such as, glyphosate decreases and even disappears.

The invention comprises a number of preferred features that are the subject-matter of the dependent claims and which usefulness will be highlighted below in the detailed description of an embodiment of the invention.

Preferably, said plant fibres comprise first fibres of length between 10 and 100mm in a proportion of at least 5 % with respect to the total weight. A small number of plant fibres of relatively long length have been experimentally proven to provide a unifying effect that improves the stability of the final product, so that shorter fibres, in particular hair, are less likely to fall out of the padding. These first fibres may comprise hemp and/or other fibres, such as, jute or flax. Preferably, said first fibres have a length of 60mm, which is a particularly advantageous value, since they can be readily obtained in the market, while providing sufficient stability for most padding configurations.

Preferably, said first fibres are in a proportion of between 5 % and 20 % with respect to the total weight, which has been experimentally proven to be a particularly advantageous margin in terms of the amount of said first fibres and is sufficient to maintain the stability of the product. Preferably, said first fibres are in a proportion of 10% with respect to the total weight.

Preferably, said first fibres comprise hemp, jute or flax fibres, or combinations thereof. In this way, the first fibres may be at least part of the hemp fibres of the padding and may further comprise other types of fibres. Jute and flax are particularly advantageous options, given their features related to the growing, recycling and market presence. Among these options, jute is a particularly preferred option, since it can be recycled from other products and, in addition, flax cultivation has higher water requirements.

Preferably, said plant fibres comprise only hemp fibres and said hemp fibres have an amount of hemp trunk waste less than 15% with respect to the total hemp weight. Thus, these types of refined hemp fibres are substantially free of trunk waste and other impurities containing significant amounts of lignin and which make it difficult for the hemp to easily mix with the rest of the fibres to form the padding. In this way, these hemp fibres are easier to use for the padding than the typical industrial hemp fibres, where logs and other irregularities are present. With this type of fibre it is generally not necessary to add another type of plant fibres in the mixture to create the padding, for example, jute and/or flax. In contrast, the manufacturing cost may be slightly higher as additional hemp processing is required to obtain fibres with these types of characteristics.

Preferably, said padding has a thickness between 1 and 20 cm. Mulches formed with thinner padding have a lower durability and offer less protection, but at the same time are more easily manipulable especially for small applications, for example, in gardening. In contrast, thick mulches are more durable and offer greater protection, which can be particularly advantageous in situations where great protection of soil and plants is required, for example, in agricultural operations. Although mulches with thicknesses higher than 20 cm can be envisaged, for practical purposes their handling, storage and deployment may be too difficult in relation to the benefits they could provide.

Preferably, said padding has a grammage of between 100 and 4000 gr/m². In a similar way to the thickness of the padding described above, its grammage is also related to density, so that higher weights imply more material per surface unit. The effects and advantages, as well as the considerations on specific grammages, are equivalent to those of the padding thickness described above. In a preferred embodiment, said padding has a grammage of 1000 g/m². Said grammage has a durability that allows it to be used for more than one season, which is particularly advantageous to protect trees, such as, olive trees, almond trees or fruits trees, thus avoiding the tasks of the farmer, who does not need to remove the remains of the previous mulch and place a new one. These grammages and, in particular, that of 1000 g/m² or higher may allow reducing and even avoiding the use of herbicides, such as, glyphosate, and thus they are particularly advantageous for ecological agriculture. Intermediate weights are particularly advantageous to be used in parks, so that less water is used in their maintenance and that they also allow the soil to be enriched.

Preferably, said sheet structure is formed by at least two overlapping layers that have been compacted and intertwined by means of a punching process, such that the different fibres, both vegetable and human hair, are intertwined and the padding maintains the structural integrity by forming a sheet web that can be deployed on the soil to be protected.

The invention also relates to an agrotextile mulch comprising a padding according to any of the preferred forms described above, suitable for use in agriculture, horticulture or gardening.

The invention also relates to the use of a padding according to any one of the preferred forms described above as a protective element for one or more plants, deployed on a substrate, in particular in the field of agriculture, horticulture or gardening,
The invention also relates to the use of a padding according to any of the preferred shapes described above as a protective element, wound around the foot of a tree or vine.

The invention also relates to the use of a padding according to any of the preferred forms described above for urban gardens, in particular vertical gardens, for example, of a mural type both indoors and outdoors, or urban vertical gardens of those used to regulate the temperature in city buildings and capture CO₂.

In addition, the use of padding for other applications can be envisaged. By way of non-exclusive examples, for plants in plant pots, indoor or outdoor ornamental plants, raised beds of vegetables, urban orchard gardens, bushes, trees, particularly fruit trees, orchards, for example, in the cultivation of lettuce, cauliflower, cabbage, asparagus, strawberries, etc., as well as in micro gardening, to protect fruit trees and vines by placing them around or even for floating gardens.

The invention also relates to a device for agriculture, horticulture or gardening comprising:
- a padding according to any of the preferred embodiments described above;
- measurement means, attachable to said padding, and configured to obtain measurements of environmental conditions, preferably periodically;
- communication means, configured to send said measurements to a server; and
- power supply means, configured to electrically power said measuring means and said communication means.

In the context of this invention, environmental conditions refer to the environment generically, for example, may include both air and soil conditions. Given that the mulch is deployed in the area to be protected, and the measuring means can be attached to said mulch, the generated device is easily deployable over said area. Thus, the described device combines the advantages of the mulch described above with the additional possibility of tracking the conditions to which the plants to be protected are exposed. By way of non-exclusive examples, the measuring means may comprise, for example, sensors for humidity, temperature, pH, salinity, conductivity, dissolved oxygen, redox potential, etc. Likewise, the communication means can be centralised for all the measuring means, although it is also possible that each measuring means comprises a stand-alone unit comprising both sensors and communication means, or even intermediate situations, in which a group of measuring means use communication means and other measuring means use other different communication means. In any case, the communication means may comprise both wired communications and, more preferably, wireless communications, by way of example, with technologies, such as, Wi-Fi, Bluetooth, WiMAX, 4G or 5G telephony, Zigbee, etc. Likewise, embodiments may be envisaged, in which the device comprises control means for receiving said measurements from the measuring means and send them to said server through said communication means, either the raw measurements, or with a preprocessing and/or filtering thereof. In connection with the server, the skilled person will understand that a generic term is used here and may be any server environment known in the art, e.g., a physical server, a server cluster, one or more virtual servers, etc.

Preferably, said power supply means comprise at least one photovoltaic solar panel and/or one or more batteries, such that no wiring to the network is required, and the device may operate autonomously. Combining one or more photovoltaic panels with one or more batteries is particularly convenient for maintaining operation, even when available solar power is low or non-existent, for example, at night or in bad weather.

Preferably, said measurements of environmental conditions of said measuring means comprise at least one of:
- soil humidity;
- soil temperature;
- soil conductivity;
- soil pH;
- soil salinity;
- dissolved oxygen;
- redox potential;
- air temperature; and
- air humidity.

Preferably, the soil-related measuring means, in particular, for humidity and/or temperature measurements are configured to perform measurements at two depths, more preferably at - 15 cm and at -30 cm, such that a more accurate profile of the irrigation needs can be obtained.

Preferably, said measuring means comprise at least a plurality of temperature and humidity sensors arranged at different points of said padding, such that measurements can be made at different points of the area to be protected, and thus having measures with detailed information that allow to assess whether there is any specific divergence or problem in any part of said area. By way of non-exclusive example, a device configuration with a 100 m long mulch in which various humidity and temperature sensors are attached can be provided, so that the user can use the corresponding measures to determine the irrigation needs.

The invention also relates to a system for agriculture, horticulture or gardening comprising:
- at least one device in any of the ways described above;
- a server for receiving said measurements from said at least one device; and
- a client application, configured to establish a connection with that server and view said measurements.

In this way, the user can receive the status information in the client application, for example, a smartphone or tablet application. The server may also be configured to allow access to different users, each associated with one or more devices deployed on the user's premises, and wherein each user receives the information only from the devices associated to said user. This client-server structure allows the reuse of elements and the ability to offer monitoring as a service to the user who has purchased one or more devices of the indicated type.

The invention also relates to the use of one or more devices or system according to any of the preferred embodiments described above to protect one or more plants and obtain status information thereof and/or of the soil.

The invention also relates to a method for manufacturing a padding suitable for agrotextile use having a non-woven sheet structure, the method having the following steps:
- mixing, preferably in a silo or chamber, a mixture of human hair and plant fibres, said mixture being free of fibres of non-human animal origin; wherein said plant fibres comprise at least hemp fibres in a proportion ranging between 30% and 70% with respect to the total weight, and wherein said human hair is in a proportion ranging between 30% and 70% with respect to the total weight;
- carding said mixture to obtain a veil;
- folding said veil in at least two overlapping layers;
- punching said overlapping layers to intertwine the fibres and obtaining a compacted web; and
- cutting this web to obtain this padding.

This method allows the creation of a padding with structural characteristics and stability that are particularly suitable for the combination of fibres and human hair described above.

The invention also relates to a method for manufacturing an agrotextile padding having a non-woven sheet structure having the following steps:
- creating a veil by means of an air laid process from a mixture of human hair and plant fibres, said mixture being free of fibres of non-human animal origin; wherein said plant fibres comprise at least hemp fibres in a proportion ranging between 30% and 70% with respect to the total weight, and in which said human hair is in a proportion ranging between 30% and 70% with respect to the total weight;
- preferably, folding said veil into at least two overlapping layers;
- punching said veil to intertwine the fibres and obtaining a compacted web; and
- cutting this web to obtain said padding.

The invention also relates to an agrotextile padding obtained by one of the methods described above, as well as the corresponding applications of said padding, which equivalently correspond to those described for the padding indicated at the beginning.

After the development of the padding described above and its initial uses in the fields related to crops and plant protection, additional tests have been carried out in other application fields in which said padding has been highly advantageous given its structural and compositional characteristics, maintaining a low environmental impact for its manufacture. Said applications share the same general inventive concept of using, as the main element, a padding composed of hair and vegetable fibres, with the advantages initially described.

One of the most remarkable applications is in water decontamination barriers, for example, seawater and, in particular, for use in ports.

Thus, the invention also relates to a floating barrier for water decontamination comprising:
- a plurality of absorption segments, having an elongated shape with two opposite ends;
- floating means, configured to maintain afloat said plurality of absorption segments; and
- attachment means, for attaching said segments together forming said barrier;
wherein at least one of said absorption segments, and preferably each of said segments, comprises:
- a cover, made of a material that allows water to pass through; and
- a filler, comprising a padding according to any one of the embodiments described above.

In the field of environmental management, water decontamination barriers made of polypropylene are known for capturing, in particular, hydrocarbons and/or heavy metals present in water. These types of barriers are used, for example, in port environments, either sea, lake or river, where the presence of these contaminants is common due to oil and fuel spills from vessels. However, the use of plastic materials has the drawback that, in addition to the environmental impact for manufacturing and obtaining them, they can decompose by generating microplastics, that are released into the water and can pass into the ecological system of marine fauna.

In comparison, the barrier of the invention is made of natural fibres and its contaminant absorbing elements do not require the presence of synthetic materials. The padding of the invention has proved to have very advantageous characteristics in terms of the absorption of contaminants, particularly for oils and hydrocarbons. In particular, hair has a remarkable adsorption effect for oils and hydrocarbons, which also occurs with the combination of hair with other vegetable fibres and, especially, in the case of hemp fibres. In this way, barriers made with these fibres have comparable or even better contaminant absorption characteristics than barriers based on synthetic materials. Preliminary testing has shown an oil filtering capacity of about 5.6 times the weight of the barrier.

In addition, as these are barriers are formed by segments, the assembly is easy to deploy and pick up, making it easy to handle and use in many environments. Segments can be joined in different configurations depending on the characteristics, shape, and dimensions of the location where the barrier is to be used.

Preferably, said attachment means comprise loops at each of said ends of said at least one segment and at least one carabiner, said carabiner preferably being made of stainless steel, in particular of type 316. Thus, the carabiner is used to attach the loop of one segment to another adjacent segment of the barrier.

Preferably, said filler comprises a plurality of padding scraps and/or at least one padding sheet, creased inside said cover. This is an embodiment that maximises the outer surface of the padding which, in turn, can result in a maximisation of the adsorption capacity, and also allows the use of manufacturing residues of said padding.

Preferably, said filler comprises at least one padding sheet wound on itself, thereby forming a padding roll. This embodiment provides more stability to the segment and has constant absorption characteristics. The resulting filter has a spiral shape, and thus, the water passing through is interrupted by different layers that filter out potential contaminants.

Preferably, said filler comprises human hair, wrapped in said padding. As discussed above, hair has a high adsorption capacity for contaminants, particularly oils and hydrocarbons. For this reason, a barrier, in which segments contain human hair could be a good solution for manufacturing decontamination barriers, with the re-use of that hair, rather than its removal, as described above. However, the use of hair directly inside a barrier is not practical, or at least it is difficult. Mostly, hair tends to escape through the gaps of the cover, which implies a degradation of the medium where the barrier is used and of the barrier itself. On the other hand, the use of human hair as the main filling element would imply a considerable decrease in the manufacturing costs of the barrier. In this way, the preferred form described is a solution that provides the advantages of both parts: on the one hand, human hair is used directly, but said hair is confined in a wrapping structure created by the padding of the invention. This padding prevents hair from leaking out (or at least reduces this problem), while still maintaining the absorption capacity, as its adsorption characteristics are very similar to those of pure human hair. In a preferred option, the padding that wraps around pure human hair has a grammage of at least g/m² to improve the containment characteristics of the hair, more preferably between 850 and 1000 g/m², in order to maintain good flexibility, low weight and an low manufacturing cost.

Preferably, said cover is made of a fabric, so that water can pass through it without too much opposition for the filling to perform the filtering. Said fabric is preferably made of cotton, in particular organic cotton and/or hemp, although a preferred embodiment is with hemp fabric, given the above-mentioned advantages in terms of cultivation and manufacturing.

Preferably, each of said segments comprises two external handles, each one arranged in a proximal region to one of the ends of said segment. This configuration makes it easy to handle and transport. Further, it allows the attachments means, for example, the loop and carabiner, to attach the end of a segment to a handle of the contiguous segment. This form of assembly causes the contiguous segments to be partially overlapped, reducing the chance of unfiltered water flowing between them. In addition, in cases where the barrier has measuring devices, as will be seen below, these devices can be safely located in the overlapping region between contiguous segments.

Preferably, at least one of said segments comprises at least one additional handle arranged in an intermediate region of said segment, which is particularly advantageous for handling and transport, especially for long segments.

Preferably, each of said handles comprises a handle made of the same material as said cover and preferably, provided with a reinforcing band, more preferably of hemp fabric, extending longitudinally through said handle, said handle being sewn to said cover, and said cover having a reinforcing region at the junction with said handle. In this way, the same type of materials is used as in the rest of the elements and, in the particular case of hemp, the environmental impact of the manufacturing is minimized. Reinforcement regions and the reinforcement on the handle itself improve the technical effects described above for them.

Preferably, said floating means comprise cork floats attached to the ends of each of said absorption segments. Cork, in particular natural cork as used in the invention, is also a biodegradable material, of low environmental impact, with good buoyancy characteristics to be able to keep the barriers of the invention afloat, and which avoids the use of other synthetic materials, in particular plastics, commonly used in the manufacture of buoys or floats.

Preferably, said floating means comprise cork floats arranged inside said cover, being part of said filler. In this way, buoyancy is more uniform across each segment of the barrier. Internal and external cork floats may also be combined, for example, with those described above.

Preferably, the barrier further comprises at least one measuring device comprising:
- at least one sensor for obtaining water measurements;
- communication means, configured to send said measurements to a server;
- power supply means, configured to electrically power said at least one sensor and said communication means;
- floating means; and
- fastening means, for fastening said measuring device to said barrier.

This embodiment is particularly advantageous to monitor the condition of the water in which the barrier has been deployed, observing its temporary evolution, detecting spills and obtaining measurements that allow observing the operation of each barrier or determining when it should be replaced. This monitoring may be done in real time, for example, with regular sampling, and sending the measured data to the server. The shape and configuration of the barrier of the invention allows the measuring device to be securely fastened, for example, with each of said at least one measuring device being fastened to two contiguous segments of said barrier. This option is particularly advantageous in combination with the handle and loop structure described above.

Preferably, said power supply means comprise at least one photovoltaic solar panel and/or a battery, which may potentially guarantee the autonomy of the barrier over its lifetime.

Preferably, said water measurements comprise at least one of temperature, conductivity, pH, salinity, dissolved oxygen and contaminants present in water, in particular oils, hydrocarbons and/or heavy metals.

Preferably, said floating means comprise floats, preferably cork, for reasons similar to those described above. Furthermore, the fastening means preferably comprise at least one carabiner, which may advantageously be made of stainless steel, in particular of type 316.

The invention also relates to a water decontamination system comprising:
- at least one floating barrier according to any one of the shapes described above;
- a server for receiving said measurements from said at least one measuring device; and
- a client application, configured to establish a connection with that server and view those measurements.

The type of configuration is equivalent to that described for the use system with mulches for agricultural applications, and for the sake of brevity, it will not be repeated here. The combination of a decontamination barrier with a sensing system allowing data monitoring is particularly advantageous not only for the decontamination itself, but also for the prediction and response to specific events that may occur in the water area o areas, where said barriers are deployed. This effect is enhanced by the fact that several of the ways of performing barriers facilitate the placement of monitoring devices.

The invention also relates to the use of padding as an insulator in different applications, since it has been proven to have remarkable advantageous characteristics as a breathable thermal insulator and also as a sound insulator, which allows obtaining the benefits of low ecological impact in its manufacture in fields, where such characteristics can be used.

Thus, the invention also relates to a construction insulator comprising a padding according to any one of the embodiments described above. And this provides advantageous thermal and sound insulation characteristics.

The invention also relates to an automotive insulator comprising a padding according to any one of the embodiments described above. Preferably, an insulator for use in a caravan, motorhome or a camper van.

The invention also relates to a thermal insulator for shoes comprising a padding according to any one of the embodiments described above.

The invention also relates to a thermal insulator for clothing comprising a padding according to any one of the embodiments described above.

The invention also relates to an aircraft seat cover comprising a padding according to any one of the embodiments described above.

The invention also relates to a sound absorber comprising a padding according to any one of the embodiments described above, in particular, for use in speakers and/or for soundproofing spaces.

Further, the invention also includes other detail features illustrated in the detailed description of an embodiment of the invention and in the following figures.

### Description of the Drawings

Further advantages and features of the invention will become apparent from the following description, in which, without any limiting character, preferred embodiments of the invention are disclosed, in reference to the accompanying figures**.** The figures show:
Fig. 1, shows two paddings according to the invention in a rolled presentation for transport and storage.
Fig. 2, shows an example of the padding of the invention protecting the soil around a tree, for example an olive tree.
Fig. 3, shows an example of how the padding is deployed to protect plants.
Fig. 4, shows another example of the padding deployed to protect plants.
Figs. 5A to 5E, show different usage examples of the padding according to the invention.
Fig. 6, shows real usage examples of paddings according to the invention for protecting lettuce plants during their cultivation.
Fig. 7, shows a usage example of the padding for protecting a vertical wall-shaped garden.
Fig. 8, shows a usage example of the padding for protecting the foot of a vine.

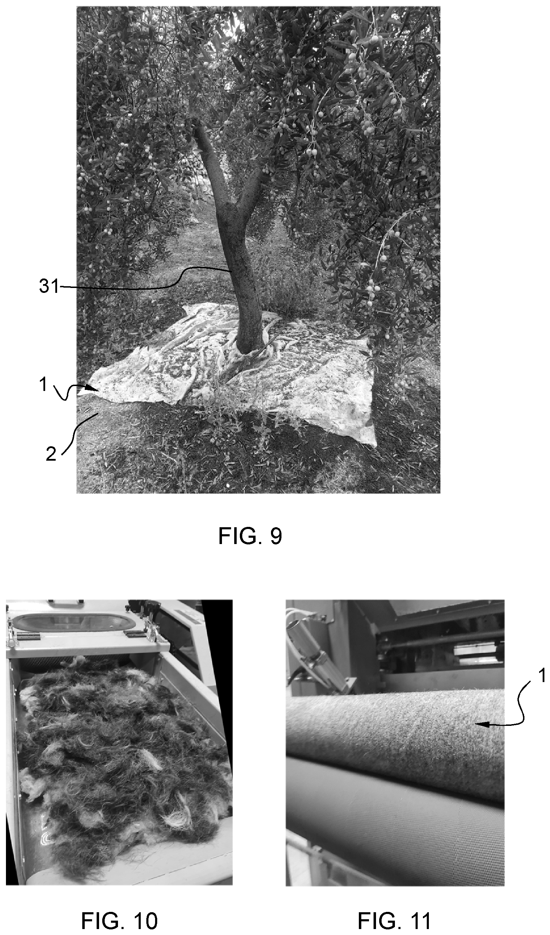

Fig. 9, shows a usage example of the padding for protecting a tree, in particular an olive tree.
Fig. 10, shows an example of an initial mixture of plant fibres and human hair from which the padding is made.
Fig. 11, shows an example of a finished padding at the time when it is rolled for storage and transport.
Fig. 12, shows a rolled padding forming a padding roll suitable for its use on a floating barrier for water decontamination.
Fig. 13, shows a diagram of an embodiment of a floating barrier for water decontamination according to the invention.
Fig. 14A, 14B and 14C, respectively, show schematic top, side and inner views of an embodiment of an absorption segment of a floating barrier for water decontamination according to the invention.
Fig. 15A, 15B and 15C, respectively, show schematic top, side and internal views of another embodiment of an absorption segment of a floating barrier for water decontamination according to the invention.
Fig. 16, shows a diagram of another embodiment of a floating barrier for water decontamination according to the invention.

### Detailed description of embodiments of the invention

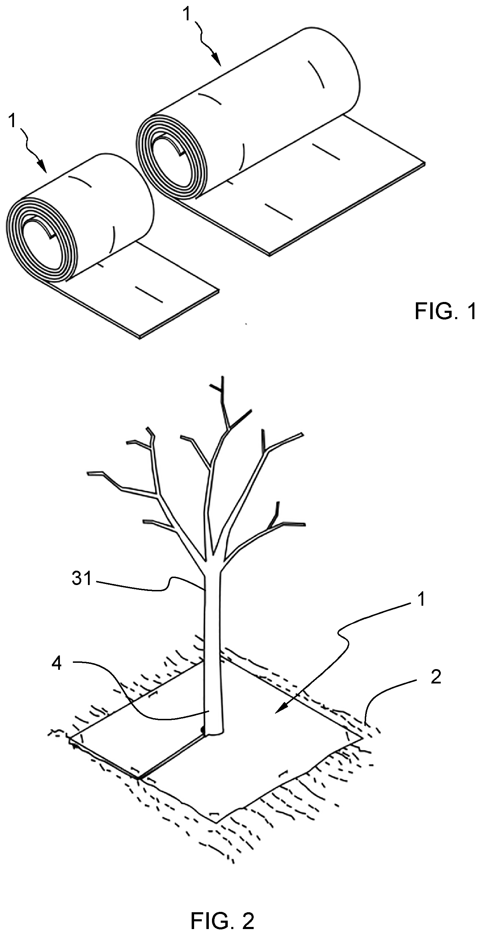

Fig. 1 shows a first embodiment of a padding 1 suitable for agrotextile use according to the invention, which is presented as a rolled sheet structure for being deployed on a surface for applications in agriculture, horticulture, viticulture or gardening. The figure shows two exemplary presentations, a wider one that allows to protect several plants in parallel and a narrower one, typically for a single row of plants. The sheet structure is a non-woven web that is composed of a mixture of human hair in a proportion ranging between 30 and 70% and of plant fibres in a proportion ranging between 70 and 30%, all proportions being understood by weight to the total weight of the product. The sheet structure is free of non-human animal fibres. In the case of the first embodiment, the padding is made only of human hair from beauty salons and hemp fibres, both at a proportion of 50% with respect to the total weight of the product. The hemp fibres of the first embodiment have previously gone through a cleaning process, such that they are substantially free of trunk waste and other impurities accounting for less than 15% of the total weight of hemp. Furthermore, hemp fibres have an average length of about 60 mm. The padding is 0.8 cm thick and has a grammage of 490 g/m². This embodiment is advantageous if the application requires that it does not last very long, so that in a few months the mulch formed by the padding 1 is degraded and integrated by enriching the soil. In subsequent sowings, a new padding 1 can be deployed.

Although different ways of manufacturing can be envisaged, the agrotextile padding 1 of the first embodiment has been manufactured by creating a veil through an air laid process, from the mixture of human hair and hemp. The veil is folded into at least two overlapping layers and is punched to compact and intertwine the fibres, thereby obtaining the compacted web. Finally, it is cut to the desired size to create the padding and is rolled up for transport and storage.

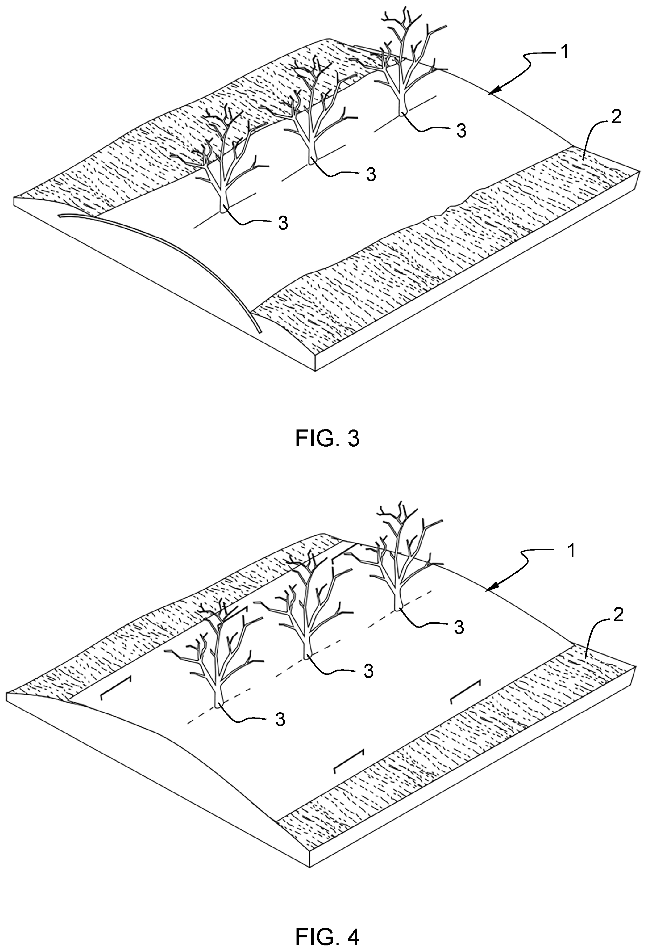

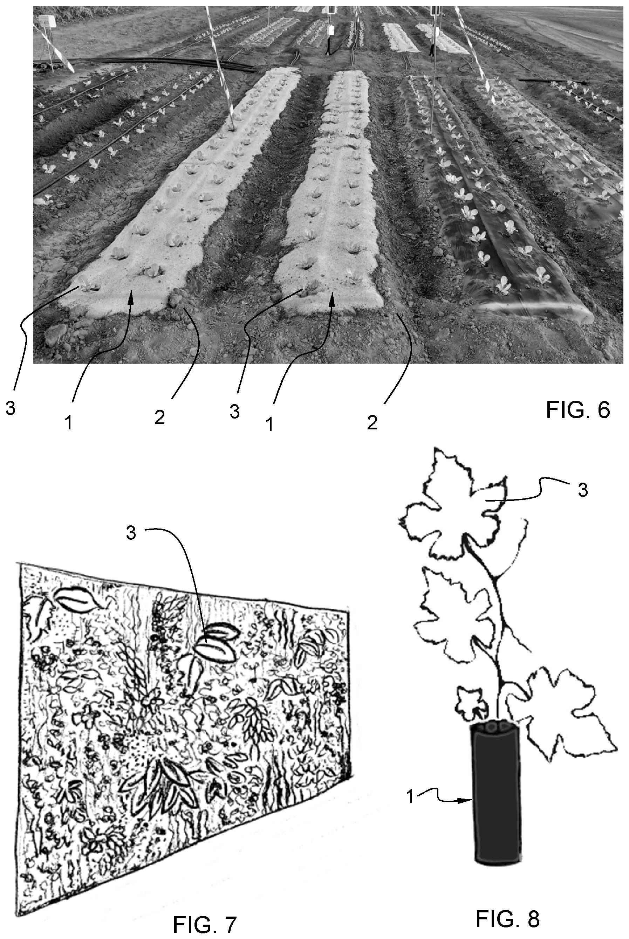

Fig. 3 shows a diagram of a way of unfolding the padding 1 onto the ground as a mulch to protect plants 3, as can be seen, the plants 3 are surrounded by it and the ends of the padding 1 are buried for fixing the padding. Fig. 4 shows an alternative form of deployment, in which staples are used for fastening the padding 1 to the soil. Fig. 6 shows a real picture of the padding 1 of the first embodiment deployed on a substrate 2, in this case the soil of a garden, such that it is used as a protective element for various plants 3. The figure shows in the foreground two lines of lettuce plants protected by the padding 1 of the invention, which are represented in a light colour. The picture corresponds to comparative tests with respect to when no mulch is used, and also with respect to plastic mulches (which is shown in the dark lines). The two mulches according to the invention in the foreground are different: the mulch indicated on the left corresponds to that of the first embodiment, while the one in the centre has a grammage of 980 g/m² and a thickness of 1.5 cm. Preliminary test results indicate that, among other advantages, water requirements compared to the mulch-free control could be around 30% or more, similar to the case of plastic mulches, but without their drawbacks.

Fig. 2 shows an example of the padding 1 used to protect a single tree, for example, an olive tree. In some trees, it is also desirable to protect the foot 4 thereof. This type of use is also common in vineyards, where foot 4 of the vine is protected, as shown in Fig. 8, and usually also the vineyard soil.

Below, there are other embodiments of the padding according to the invention, which share much of the features described in the preceding paragraphs. Therefore, only differentiating elements will be described hereinafter, while for common elements reference is made to the description of the first embodiment.

In a second embodiment, the padding 1 has a grammage of 1000 g/m², and a thickness of between 1.5 and 2 cm, thereby increasing durability, which becomes that of a full season or even more, depending on environmental conditions and irrigation. This second embodiment is also advantageous for the creation of protective mats for transit areas. Other grammages and thicknesses are possible based on the desired durability and application characteristics.

In a third embodiment, the padding 1 is made of 50% human hair, 40% hemp fibres and 10% jute fibres. Other embodiments may be envisaged, in which the jute fibres are partially or fully substituted by flax fibres. In the third embodiment, the jute and/or flax fibres have a length of about 60 mm and facilitate overall cohesion, especially if the hemp has not gone through a cleaning process to remove logs and other impurities. The grammage of this embodiment is 1000 g/m², although other grammages may be envisaged based on the desired durability and use.

In a fourth embodiment, derived from the third embodiment, the padding 1 is manufactured by means of an initial mixture of hair and plant fibres in a silo or a mixing chamber, a carding of the mixture to obtain a veil that is folded into two or more overlapping layers, which are punched to intertwine the fibres and obtain a compacted web. The web is subsequently cut and rolled for transport and storage.

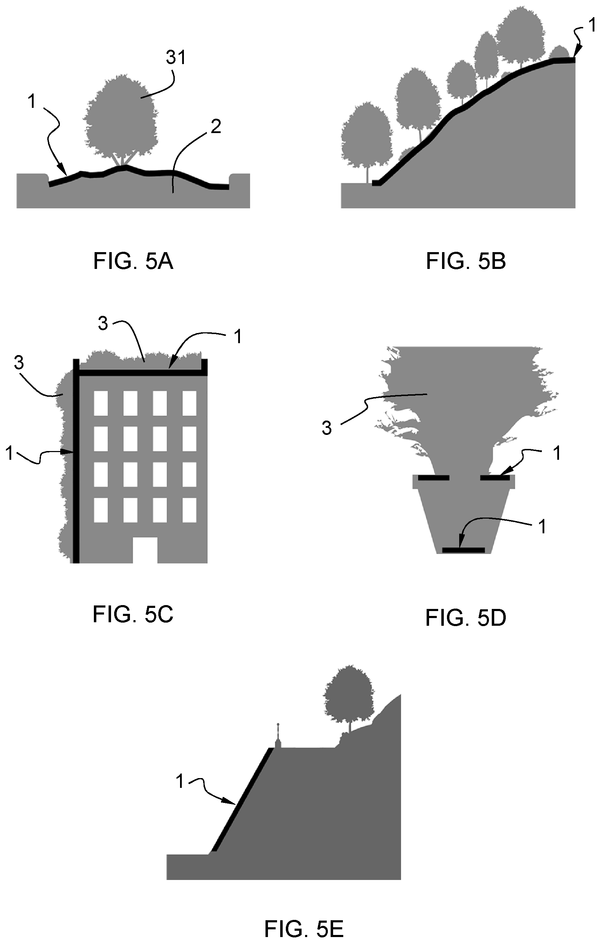

Fig. 5A to 5E show other exemplary uses of the padding 1 of the invention. Fig. 5A shows a use for agriculture, horticulture or gardening, in which the padding 1 is arranged on the soil 2 as a mulch to protect one or more plants 31. Fig. 5B shows another use, where the padding is deployed on a slope to minimize soil erosion. Fig. 5C corresponds to its use in urban gardens, both over buildings, and in the case of vertical gardens. A further example is shown in Fig. 7, where the padding 1 is used in an internal vertical garden in the form of a mural. The padding 1 of the invention is particularly advantageous for use in vertical gardens, both internal and external, because, in addition to the advantages described above, it allows improving the support of the plants in those types of vertical gardens. Regardless of the decorative effects, this application is particularly interesting for capturing CO₂ indoors and/or in cities, and also contributes to regulating the temperature in buildings, which in turn contributes to decreasing the needs of the use of air conditioning. Fig. 5D shows another use in gardening, with the padding arranged on top of the substrate of a plant pot and/or at the bottom to avoid flooding of the roots, that could cause accumulated water. Fig. 5E shows another example of use for slope stabilisation.

A fifth embodiment not shown in the figures is derived from the second, third or fourth embodiment, although it can also be envisaged to be derived from the first embodiment or even other embodiments corresponding to different compositions and grammages of the padding 1. In this fifth embodiment, a device is provided including the padding 1 described above, as well as a number of elements that allow to carry out measurements of the environment, the soil or even the plants to be protected. First, measuring means, in particular sensors, arranged at different points of the padding 1 and attached to it to perform soil measurements and environmental measurements. Sensors allow measurements of soil humidity, temperature and conductivity to be taken at two depths: -15 cm and -30 cm. Other embodiments have additional sensors, for example, to measure pH, dissolved oxygen, redox potential, and soil salinity. In other embodiments, in addition to the described soil sensors, the device is also provided with air temperature and humidity sensors. Measurements are performed periodically and sent to a server over a wireless data connection. Active elements (sensors, communications, etc.) are powered by one or more photovoltaic solar panels through one or more batteries that allow the energy generated by the solar panels to be stored and a stable power to be maintained.

In the sixth embodiment, there is also provided a complete system having of one or more of the described devices, a server receiving the measurements and a client application that communicates with the server and allows showing said measurements and carrying out a tracking.

Other application examples for the padding 1 according to the invention are the following:
- construction insulator comprising said padding 1;
- automotive insulator comprising said padding 1, in particular for use in a caravan, motorhome or a camper van;
- thermal insulator for shoes comprising said padding 1;
- thermal insulator for clothing comprising said padding 1;
- sound absorber comprising said padding 1, in particular for use in speakers and/or for soundproofing spaces
- aircraft seat cover comprising said padding 1.

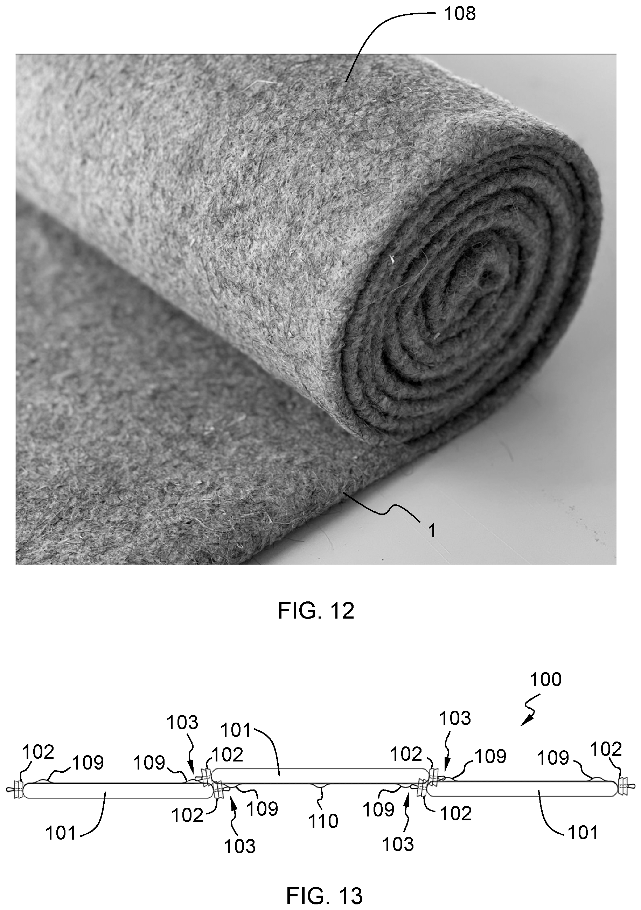

Fig. 12 to 16 refer to some embodiments of a floating barrier 100 for water decontamination, for example, for use in ports.

Fig. 13 shows a first embodiment of said floating barrier 100. The figure schematically shows a barrier 100 formed by three absorption segments 101, although even longer barriers may be envisaged by attaching more segments 101. Each of the segments 101 has an elongated shape with two opposing ends and a tubular structure with a cover 104, made of a water-allowing material, and a filler 105, comprising a padding 1 as described above. In particular, a filler 105 made of human hair wrapped in said padding 1 is used. Some of the segments 101 may also have fillers formed of padding sheets 1 rolled onto themselves, thereby forming a padding roll 108 as shown in Fig. 12. In other embodiments, the padding 1 is incorporated into the filler by creasing padding 1 scraps and/or one or more sheets of padding 1. In the exemplary embodiments, a padding 1 with a relatively high grammage, between 850 and 1000 g/m², is used, especially in the case that the padding 1 is wrapping pure human hair, thereby improving the containment thereof. Other grammages are possible, depending on the internal arrangement of filler 105, as well as different thicknesses for the sheets of padding 1 although for the example a thickness of between 5 and 15 mm, generally 10 mm, is used. In turn, the cover 104 is made of hemp fabric, although it is possible to use other types of fabric, for example, cotton, in particular organic cotton.

In the exemplary figure, the filled portion of central segment 101 has a length of 150 cm and a diameter of 10 cm, while for the two side segments 101 said length is 120 cm, although other dimensions suitable for the specific application can be envisaged.

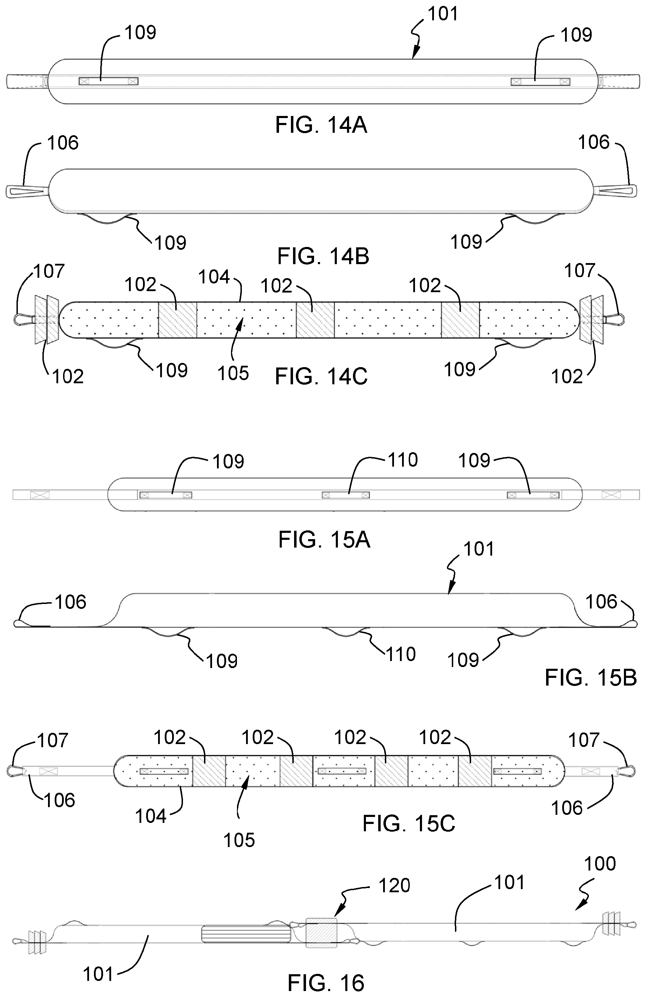

Fig. 14A-14C show different schematic detail views of a segment 101 as used in the barrier 100 of Fig. 13. In particular, Fig. 14A is a top view and Fig. 14B is a side view, while Fig. 14C schematically shows the internal content of the segment 101, as well as some additional elements that are also part of the barrier 100, in particular:
- floating means 102 that are configured to maintain afloat said plurality of absorption segments 101; and
- attachment means 103, for attaching said segments 101 together, forming said barrier 100;

In the exemplary embodiment, floating means 102 comprise natural cork floats attached to the ends of each of said absorption segments 101. In addition, segments 101 have other natural cork floats inside the cover 104, which are part of the filler, and which also act as floating means 102. In turn, attachment means 103 comprise loops 106 at each end of each segment 101, and a stainless-steel carabiner 107 for attaching said segment to the contiguous segment 101.

As shown in the figures, each of the segments 101 is provided with two external handles 109, each arranged in a proximal region to one of the ends of said segment 101. In some embodiments, the segment 101 may also have additional handles 110, as in the case of the centre segment shown in Fig. 13 or in the example of Figs. 15A-15C. Although other options are possible, for the embodiments described herein each of the handles 109 and 110 is formed by a handle made of the same material as the cover 104 and provided with a hemp reinforcement band extending longitudinally through said handle. Each handle is sewn to the cover 104, and said cover 104 has a reinforcing region at the junction with the handle.

Fig. 16 shows an exemplary embodiment of a barrier 100, which is also provided with a measuring device 120. It should be noted that the figure is simplified, and thus, it is possible to envisage configurations with a greater number of segments 101 and measuring devices 120, for example, one device at each junction between two contiguous segments 101.

The measuring device 120 is provided with one or more sensors for obtaining periodic water measurements, for example, temperature, conductivity, pH, salinity, dissolved oxygen and contaminants present in the water, in particular oils, hydrocarbons and/or heavy metals. Different devices 120 of the same barrier 100 may be identical to each other or each may have its own sensor or sensors. The measuring device 120 also has wireless communication means that are configured to send sensor measurements to a server. For powering the electronics, the measuring device 120 has power supply means that, in the case of the example, comprise a photovoltaic solar panel and a battery. Moreover, to ensure the buoyancy of the measuring device 120, said device has floating means formed by natural cork float elements. The measuring device 120 can be fastened to the barrier by means of fastening means comprising one or more stainless steel carabiners. In particular, each measuring device 120 is fastened to two contiguous segments 101 of the barrier 100, as seen in Fig. 16. It must be noted that this same configuration can be obtained with the barrier of Fig. 13, since the segments 101 are flexible.

Based on any of the barriers 100 provided with sensors described above, the invention allows creating a water decontamination system comprising one or more of said floating barriers 100, arranged in the same water area or in different areas (e.g., one near to a city and one in nearby port). The system also has a server for receiving the measurements from each measuring device 120 and a client application (e.g., a mobile system app, a web page, etc.), configured to establish a connection with said server and to display said measurements.

## Claims

1. Padding (1) suitable for agrotextile use, having a non-woven sheet structure, **characterised in that** said non-woven sheet is composed of human hair and plant fibres, and is free of fibres of non-human animal origin; wherein said plant fibres comprise at least hemp fibres in a proportion ranging between 30% and 70% with respect to the total weight, and wherein said human hair is in a proportion ranging between 30% and 70% with respect to the total weight.

2. Padding (1) according to claim 1, wherein said plant fibres comprise first fibres having a length between 10 and 100 mm in a proportion of at least 5% with respect to the total weight.

3. Padding (1) according to claim 2, wherein said first fibres are in a proportion of between 5% and 20% with respect to the total weight.

4. Padding (1) according to any one of claims 2 or 3, wherein said first fibres comprise hemp, jute or flax fibres, or combinations thereof.

5. Padding (1) according to any one of claims 1 to 4, wherein said plant fibres comprise only hemp fibres, and said hemp fibres have an amount of hemp trunk waste less than 15% of the total hemp weight.

6. Padding (1) according to any one of claims 1 to 5, wherein said sheet structure is formed by at least two overlapping layers that have been compacted and intertwined by a punching process.

7. Method for manufacturing a padding (1) suitable for agrotextile use having a non-woven sheet structure, **characterised in that** said method has the following steps:
- mixing, preferably in a silo or chamber, a mixture of human hair and plant fibres, said mixture being free of non-human animal fibres; wherein said plant fibres comprise at least hemp fibres in a proportion ranging between 30% and 70% with respect to the total weight, and wherein said human hair is in a proportion ranging between 30% and 70% with respect to the total weight;
- carding said mixture to obtain a veil;
- folding said veil into at least two overlapping layers;
- punching said overlapping layers to intertwine the fibres and to obtain a compacted web; and
- cutting said web to obtain said padding (1).

8. Method for manufacturing a padding (1) suitable for agrotextile use having a non-woven sheet structure, **characterised in that** that said method has the following steps:
- creating a veil by means of an air laid process from a mixture of human hair and plant fibres, said mixture being free of fibres of non-human animal origin; wherein said plant fibres comprise at least hemp fibres in a proportion ranging between 30% and 70% with respect to the total weight, and wherein said human hair is in a proportion ranging between 30% and 70% with respect to the total weight;
- preferably, folding said veil into at least two overlapping layers;
- punching said veil to intertwine the fibres and to obtain a compacted web; and
- cutting said web to obtain said padding (1).

9. Padding (1) obtained by a manufacturing method according to any one of claims 7 or 8.

10. Device for agriculture, horticulture or gardening comprising:
- a padding (1) according to any one of claims 1 to 6;
- measuring means, attachable to said padding (1), and configured to obtain measures of environmental conditions;
- communication means, configured to send said measures to a server; and
- power supply means, configured to electrically power said measuring means and said communication means.

11. Device according to claim 10, wherein said measurements of environmental conditions of said measuring means comprise at least one of:
- soil humidity;
- soil temperature;
- soil conductivity;
- soil pH;
- soil salinity;
- dissolved oxygen;
- redox potential;
- air temperature; and
- air humidity.

12. Device according to any one of claims 10 or 11, wherein said measuring means comprise at least a plurality of temperature and humidity sensors arranged at different points of said padding (1).

13. System for agriculture, horticulture or gardening comprising:
- at least one device according to any one of claims 10 to 12;
- a server for receiving said measures from said at least one device; and
- a client application, configured to establish a connection with that server and to display those measurements.

14. Floating barrier (100) for water decontamination comprising:
- a plurality of absorption segments (101), each of said segments (101) having an elongated shape with two opposite ends;
- floating means (102), configured to maintain afloat said plurality of absorption segments (101); and
- attachment means (103), for attaching said segments (101) together forming said barrier (100);
wherein at least one of said absorption segments (101) comprises:
- a cover (104), made of a material that allows water to pass through; and
- a filler (105), comprising a padding (1) according to any one of claims 1 to 6.

15. Barrier (100) according to claim 14, wherein said filler (105) comprises at least one of:
- a plurality of padding (1) scraps;
- at least a padding (1) sheet, creased inside said cover (104); and
- a padding (1) sheet rolled over itself, thereby forming a padding roll (108).

16. Barrier (100) according to any one of claims 14 or 15, wherein said filler (105) comprises human hair, wrapped in said padding (1).

17. Barrier (100) according to any one of claims 14 to 16, wherein said cover (104) is made of a fabric, preferably at least one of hemp fabric and cotton fabric, said cotton preferably being organic cotton.

18. Barrier (100) according to any one of claims 14 to 17, wherein each of said segments (101) comprises two external handles (109), each of said two handles (109) being arranged in a proximal region to one of the ends of said segment (101).

19. Barrier (100) according to any one of claims 14 to 18, wherein said floating means (102) comprise natural cork floats attached to the ends of each of said absorption segments (101).

20. Barrier (100) according to any one of claims 14 to 19, wherein said floating means (102) comprise natural cork floats arranged inside said cover (104), being part of said filler (105).

21. Barrier (100) according to any one of claims 14 to 20, further comprising at least one measuring device (120) comprising:
- at least one sensor to obtain water measurements;
- communication means, configured to send said measurements to a server;
- power supply means, configured to electrically power said at least one sensor and said communication means;
- floating means of the device; and
- fastening means, for fastening said measuring device (120) to said barrier (100).

22. Barrier (100) according to claim 21, wherein said water measurements comprise at least one of temperature, conductivity, pH, salinity, dissolved oxygen and contaminants present in water, in particular oils, hydrocarbons and/or heavy metals.

23. Barrier (100) according to any one of claims 22 or 23, wherein each of said at least one measuring device (120) is attached to two contiguous segments (101) of said barrier (100).

24. Water decontamination system comprising:
- at least one floating barrier (100) according to any one of claims 14 to 23;
- a server for receiving said measures from said at least one measuring device (120); and
- a client application, configured to establish a connection with that server and to display those measurements.

25. Insulator comprising a padding (1) according to any one of claims 1 to 6, for use in at least one of:
- construction insulator;
- automotive insulator, in particular for use in a caravan, motorhome or camper van;
- thermal insulator for shoes;
- thermal insulator for clothing;
- sound absorber, in particular for use in speakers and/or for soundproofing spaces; and
- aircraft seat cover.
